(19) **Europäisches Patentamt**
**European Patent Office**
**Office européen des brevets**

(11) **EP 3 540 624 A1**

(12) **EUROPEAN PATENT APPLICATION**

(43) Date of publication:
**18.09.2019 Bulletin 2019/38**

(51) Int Cl.:
**G06F 21/55** (2013.01)          **G06F 21/64** (2013.01)
**H04L 29/06** (2006.01)

(21) Application number: **18398002.8**

(22) Date of filing: **14.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Scyphir, Unipessoal LDA**
**1050-184 Lisboa (PT)**

(72) Inventors:
• **Maurício Gil de Almeida**
  **1050-184 Lisboa (PT)**
• **Najwa Aaraj**
  **1050-184 Lisboa (PT)**

(74) Representative: **do Nascimento Gomes, Rui**
**J. Pereira da Cruz, S.A.**
**Rua Victor Cordon, 10-A**
**1249-103 Lisboa (PT)**

(54) **A METHODOLOGY FOR ANOMALY DETECTION OF A SEQUENCE OF COMPUTATIONAL EVENTS ASSOCIATED WITH A COMPUTATIONAL SYSTEM**

(57)    The present invention is enclosed in the area of computational anomaly detection systems, suitable for detecting anomalies within such systems or in their operation with other systems, namely communicating. It is an object of the present invention a method for anomaly detection of a sequence of computational events associated with a computational system, comprising modelling a normal behaviour of the system and determining the correspondence of the sequence of events the normal behaviour, and thereby: determining anomalies, such anomalies consisting of a sub-sequence of events of which does not correspond to said normal behaviour, and hashing a sub-sequence of events of which does correspond to said normal behaviour and subsequently adding such hashed sub-sequence of events to a Blockchain. Such method provides a differentiated approach as regards monitoring of a system and system sequence of events- whichever type of computational system is under monitoring - by providing immutable and tamper proof anomaly detection.

Figure 1

**Description**

**FIELD OF THE INVENTION**

The present invention is enclosed in the area of anomaly detection systems, suitable for detecting anomalies within computational systems or in their operation with other systems, such as communication systems.

**PRIOR ART**

Present communication systems, namely systems for text based messaging or voice/video communication (e.g. Whatsapp, Skype or Signal) do provide for security measures preventing different sorts of errors or attacks, however fail to include detection mechanisms of abnormal communication sequences / patterns, of equal or higher importance.
The solution of the present invention enhances the so called Intrusion Detection Systems by providing capabilities yet inexistent, for instance the inclusion of Blockchain Technologies to enable auditing capabilities (particularly useful for individual Transactions and sequence of Transactions), as well as a modelling and monitoring of normal behaviour (for instance by means of regular expressions), thereby enabling comparison with policies while ensuring integrity.

**SUMMARY OF THE INVENTION**

It is therefore an object of the present invention a method for anomaly detection of a sequence of computational events $Set_E$ associated with a computational system, comprising the following steps:

- modelling a normal behaviour of said computational;
- for a sequence of computational events $Set_E$ associated with said computational system, determining the correspondence of such sequence of events of $Set_E$ with said normal behaviour, and thereby:

  i) determining anomalies, such anomalies consisting of a sub-sequence of events of $Set_E$ which does not correspond to said normal behaviour, and
  ii) hashing a sub-sequence of events of $Set_E$ which does correspond to said normal behaviour and subsequently adding such hashed sub-sequence of events to a Blockchain.

Such method provides a differentiated approach as regards monitoring of a system - whichever type of computational system is under monitoring - by providing auditable, immutable and tamper proof anomaly detection. A normal behaviour is defined and each sequence of events is compared with such normal behaviour, wherein a sub-sequence of events $B_S$ which does correspond to the pre-defined normal behaviour is hashed and introduced into a Blockchain, thereby providing immutability and the ability of future auditability. Further, anomalies - associated with the sub-sequence of events $B_S'$ which does not correspond to the normal behaviour - are detected, and further actions may be carried out. The initial set of feasible events sequence may be defined as $B_f$, where $B_f = B_S \cup B_S'$. The computational system operates on data-at-rest and / or data-in-transit.

In an inventive aspect of the method of the present invention, a regular expression is defined, wherein the modelling of a normal behaviour is performed by means of a regular expression $Rp = \{BB_1, ...,BB_n\}$, where each element $BB_i$ consists of a representation of a sub-sequence of computational events which in turn corresponds to one or more policies associated with said computational system, said correspondence of $Set_E$ with the normal behaviour being thereby performed with respect to $R_P$. Such model provides that crucial data is tracked at each basic block, enabling capture of control and data flow of a sequence of events, while it consists of concrete methodology for detecting anomalies in the monitored sequence of events. Preferably, the correspondence of the sub-sequence of events of $Set_E$ with the normal behaviour consists of an intersection operation.

In an advantageous particular aspect of the method herein described, the sequence of computational events $Set_E$ is derived from computational operations with said computational system, said operations comprising:

- one or more running programs, each of such programs consisting of a benign program or malware, the computational system comprising such program and a malware detection system,
- transactions within a secure communications system, the computational system comprising such secure communications system,

- system events, the computational system consisting of an Internet connected device, optionally a high-performance computer, a cardiac pacemaker, an implantable cardioverter defibrillator or a bio-wearable device,

and, preferably, said one or more computational operations are obtained in real time.

These consist of particular and relevant implementations of the object of the present invention, where the referred innovative and advantageous abilities have been identified as best applied.

In yet an additional inventive aspect of the method of the present invention, metadata associated with said sequence of events is encrypted and concatenated with the hashed sub-sequence of events, the addition to a Blockchain of step ii) being only performed after such concatenation. Preferably, said metadata comprising, for instance, IP addresses of sender and receiver, MAC addresses of associated devices, classification level for encryption primitives or relevant flags associated with said sequence of events $Set_E$. Where the combination with Blockchain provides capturing a control flow of a sequence of events, data/metadata flow is encrypted and concatenated to the Blockchain, by means of a hash value shared with the hashed sub-sequence of events, thereby enhancing i) both real-time and post execution checks against existing and future policies, leveraging non-reversible hash properties and flexibility of obtaining data (metadata) from concatenated data fields and ii) auditing the integrity of the sequence of events (i.e., sequence of basic blocks).

In another advantageous aspect of the method of the present invention, after step ii), and upon any update of the normal behaviour (captured within a security policy), a correspondence is performed between the referred hashed sub-sequence of events and said updated normal behaviour, thereby determining anomalies in the hashed sub-sequence of events with respect to such updated normal behaviour. This provides for continued/future detection of possible anomalies, not identified on the first performed correspondence or intersection. Additionally, comparison may be performed directly on the hashed sub-sequence of events.

It is also an object of the present invention a platform for anomaly detection of a sequence of computational events $Set_E$ associated with a computational system which is configured to implement the method of any of the preceding claims.

A distributed system for anomaly detection within a sequence of computational events $Set_E$ associated with a computational system is also an object of the present invention, such system comprising the referred platform and a plurality of validating peer systems configured to maintain said Blockchain, such validating peer systems optionally consisting of computers connected in network.

It is yet an object of the present invention a non-transitory computer-readable storage media storing program instructions for implementing a method for anomaly detection of a sequence of computational events $Set_E$ associated with a computational system, the program instructions comprising instructions executable to carry out the method of the present invention, in any of the described embodiments.

## DESCRIPTION OF FIGURES

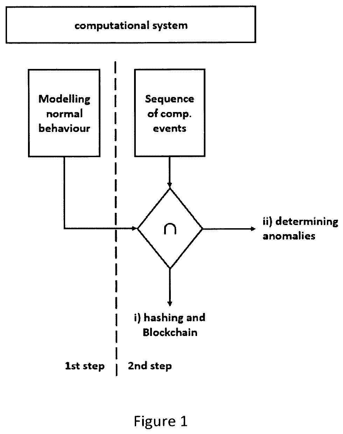

Figure 1- representation of an embodiment of the method of the present invention, in the form of a flow chart, depicting the two step configuration of the method, by defining a normal behaviour of a computational system under monitoring and a second step, consisting of a recurrent comparison of different sequences of computational events with such defined normal behaviour, and thereby determining, through intersection, i) correspondences, which are hashed and subsequently stored by means of a Blockchain mechanism and ii) non-correspondences, which are identified as anomalies and which may trigger subsequent actions.

## DETAILED DESCRIPTION

The more general and advantageous configurations of the present invention are described in the Summary of the invention. Such configurations are detailed below in accordance with other advantageous and/or preferred embodiments of implementation of the present invention.

Combination of the method of the present invention with Blockchain i) ensures auditability and immutability of stored events' sequence through BlockChain auditability properties, ii) provides a real-time immutable anomaly detection system by comparing a hash path to that of a template security policy expressed as a regular expression and iii) provides a future-proof "post execution" immutable anomaly detection activity by comparing a hash path to that of existing (updated) and / or newly derived template security policies expressed as a regular expression.

In another advantageous aspect of the method, said one or more policies comprise check of control flow, data flow and/or extracted check points, such one or more policies being derived from an artificial intelligence system training.

In another aspect of the present invention, combinable with any above described, the sequence of computational events $Set_E$ consists of:

- a set of executed transactions within the one or more running programs, thereby malware and/or malicious software execution being detected,

- a set of digital transactions within a secure communications system, thereby anomalies within communication patterns and/or communication habits and/or communication system attacks in said computational system being detected, or
- system events of the Internet connected device, thereby anomalies and/or threats in said device being detected.

Preferably, said sequence of computational events $Set_E$ is represented as a sequence of computational blocks $bb_i$, whereby $Set_E = \sum_{i=1}^{n} bb_i$ and each $bb_i$ is derived by means of a one-to-one mapping function $h$, in which $h(BB_i) = bb_i$. Also in a preferred embodiment, each of said sub-sequence of events $BB_i$ terminates at a control transfer instruction which consists of said check points, preferably such control transfer instruction consisting of:

- a threshold break between digital transactions, and /or a change in a type of digital transaction, and/or a threshold duration of a sequence of digital transactions, where the computational system is a secure communications system,
- a branch execution and/ or a jump instruction, where the computational system is a malware detection system, or
- system events that deviate from the normal behaviour, where the computational system is a connected device.

Thereby providing additional particular enhanced examples of application.

Said Blockchain is maintained in a plurality of validating peer systems, preferably each trusted validating peer system consisting of an individual system having a unique identifier.

With regard to a particular embodiment of the method of the present invention, detail is subsequently provided on the system modelling.

A sequence the sequence of events ($Set_E$) within the system to be monitored is taken into consideration.

$Set_E = \Sigma^n_{i=1} (bbi)$; each sequence of events is represented as a sequence of blocks $bbi$, where $bbi$ is derived using a one-to-one mapping function h, where $h(BBi) = bbi$.

$BBi$ being the basic block unit of a sub-sequence of events terminating at a control transfer instruction. Such control transfer instruction varies depending on the use case our methodology is applied to. For example:

- In the case of a secure communications system, a control transfer instruction could consist of (i) a threshold break between digital transactions; (ii) change in the type of digital transactions; (iii) a threshold duration of a sequence of digital transactions; etc.
- In the case of a malware detection system, a control transfer instruction could consist of (i) branch execution; (ii) jump instruction; etc.

Let $Bf$ denote the set of feasible events sequence, and $Bs$ denote the set of safe (valid) executions of the events sequence, where both $Bf$ and Bs take into consideration both data and control flow within the sequence of events. We note that $Bf = Bs \cup Bs'$, $Bs'$ being the set of unsafe events sequence. Let $Es$ denote the set of all sequences of basic blocks $bbi$ that indicate a safe sequence of events, with respect to a specific security policy. Basic block sequences in $Es$ are general representations of security properties or features that need to be satisfied. Therefore, $Bs = U(ei)$, where $ei \in Bf$ and $ei \in Es$.

Let us consider again cdflow for two different sequence of events e1 and e2 within a particular system (cdflow stands for control-data flow graph):

$$cdflow(e1) = < bb1, d1 >< bb12, d12 > ... < bb1k, d1k >$$

$$cdflow(e2) = < bb21, d21 >< bb2, d2 > ... < bb2k, d2k >$$

Without loss of generality, let us assume that blocks $<bbl1,dl1>$, $<bbli, dli>$ (with $d1i \neq d2i, \forall i$), and $<bbln,dln>$ are three critical, dependent blocks with respect to a valid or safe sequence in $Es$.

Considering the correlations between $dli$ and $dln$ along the execution of the sequence of events, most of the times, a conclusion whether $el$ is a valid execution requires execution of $BBn = h^{-1}(bbn)$.

The following observations, associated with particular inventive aspects of the present invention, are associated with such conclusions:

- Data tracking at each basic block: Crucial data, as required by Es, should be tracked at each basic block of the execution instance in order to establish a strong correlation among the basic blocks of the model.

- Control flow tracking at each basic block: Control flow, as required by Es, should be tracked at each basic block of the execution instance.
- A hybrid execution model to capture the Control and Data flow of a sequence of event within a system is advantageous.
- Security policies derived based on extensive AI systems training (pre- and post-system execution) should mirror the basic block structure of cdflow
- Captured sequence of events should be audited in real-time and post execution (as logged into the Blockchain) against existing and future policies
- Sequence of events should be documented in a data structure that ensures integrity and immutability of captured data; BlockChain technology will be used
- Hash value within BlockChain would mainly capture the control flow of a sequence of events while data (metadata) flow would be encrypted and concatenated to the Hash value

  o Thus enabling both real-time and post execution checks against existing and future policies, leveraging non-reversible hash properties and flexibility of obtaining data (metadata) from concatenated data fields
  o Also enabling auditing the integrity of the sequence of events (i.e., sequence of basic blocks)

In a particular embodiment of the present invention, BlockChain system is implemented as follows:

- Pre-defined number of Validating Peers (VP) responsible for running consensus [Practical Byzantine Fault Tolerance (PBFT) or other consensus protocol]
- VPs in enclosed invention are responsible for maintaining the ledger (VPs are known individually identifiable entities which ensure Accountability) and assisting the detection system with auditing activities
- Validation of Communications transactions and users authentication (Identity Management) is done by server components

Following instance of fields can be used to build Auditability trail for each sequence of events within the Chain

- Entity_UserID (User ID of a sending entity) - corresponding to the Asset / Entity being monitored
- Entity_PlatformID (Platform ID of a sending entity) - corresponding to the Asset / Entity being monitored
- Entity_ECC521_Pu (Public Key of a sending entity, Elliptic-curve cryptography 521)
- Entity_ECC521_Pr (Private Key of a sending entity, Elliptic-curve cryptography 521)
- Trusted CA Certificate over Entity_ECC521_Pu (Trusted Certification Authority Elliptic-curve cryptography 521)
- Metadata = Transaction Classification ∥ Other Relevant Flags
- $\Sigma\{Enc\ event\_i, ...\ Enc\_event\_n\}$ as intersected with $Rp = \Sigma\ \{BB_1, ...,BB_n\}$ (sequence of events which does corresponde with Rp)
- Nonce (incl. Time and Date) per sequence of events

$$Event\_Hash = SHA\text{-}3\ [Nonce\ ||\ Entity\_UserId\ ||\ Entity\_PlatformID\ ||\ Entity\_ECC521\_Pu\ ||$$
$$BLOB\ ||\ Signature\ using\ Entity\_ECC521\_Pr\ (BLOB)]$$

$$BLOB = (Classification\ ||\ Other\ Relevant\ Flags\ ||\ \Sigma\ \{Enc\_event\_i, ...\ Enc\_event\_n\})$$

$$CHAIN\_VALUE = ENC\{Metadata\}\ ||\ Event\_Hash$$

A BlockChain structure enables auditing of the sequence of events against the set of derived policies (and / or a future set of policies) and highlighting anomalies. It also enables the auditing system to check the integrity / immutability of individual events as well as the sequence of such events (due to properties of hash functions and Validating Peers).

Moreover, real-time monitoring is executed for the sequence of events against the policy (behaviour trace) $R_P$. Checks are performed at the granularity of control flow, data flow, and extracted check-points. If a new execution path is encountered, restrictive security policies are enforced at run-time, thus, preventing any malicious execution, and $R_P$ is updated with information regarding a newly executed path.

Such Auditability Trail using the BlockChain ensures:

- Immutability: Attempted modification of CHAIN_VALUE entails necessity of compromising private signing keys; hence, suggested computation ensures immutability
- Collision Resistence: Modification of a block (i.e., a sequence of events) affects future blocks; existence of replicas increases difficulty of undetected attack hence inclusion of Nonce, Entity UserId's and Entity PlatformId's. Additionally, we protect the blockchain via hash function agility (using SHA3) - compute parallel hashes of existing transactions.
- Auditability trails are maintained by Validating Peers (VPs) within a distributed ledger architecture in:

  ▪ VPs maintain distributed databases to include transaction hashes; hashes are added as fields {Entity_UserId , Entity_PlatformId, CHAIN_VALUE, Nonce}
  ▪ Merkle Tree structure to log transaction hashes (add CHAIN-VALUE to Merkle Tree); VPs maintain the internal state of the Merkle-Tree.

As regards another particular embodiment of the present invention, a private / permissioned Blockchain structure similar to hyperledger is applied; in which one of the differences is the role of Validating Peers:

a) Entity $E\_\{i\}$ - transaction creator - sends a series of hashed events and their corresponding data (CHAIN_VALUE) to a trusted VP; events (hashes thereof) are sent after being validated and authenticated by the corresponding server components. Such events could be comprised of:

i. Sequence of digital transactions from $E\_\{i\}$ to $E\_\{j\}$ (use case = real-time or consequent auditing of transactions within a secure communications system)
ii. Sequence of digital transaction from $E\_\{i\}$ to multiple other entities (use case = real-time or consequent auditing of transactions within a secure communications system)
iii. Execution trace of a program / binary (use case = real-time and consequent auditing of a malicious program execution / a vulnerability exploit)
iv. System events sequence (use case = real-time and consequent auditing of a system exploit / malicious system activities)

b) VP broadcasts the events' sequence to all other VPs
c) VPs validate $E\_\{i\}$'s certificates over Entity_ECC521_Pu
d) All VPs reach consensus (using PBFT algorithm - or other Consensus protocols) on the order to follow to include the events' sequence
e) Each VP independently includes the events' sequence and incorporates them (as well as the state values that result from execution) into a new block - utilizing hashing (CHAIN_VALUE) and access to the current state table; the state table is updated accordingly
f) The blockchain's hash chain is computed over the executed events' sequence and the resulting persistent state
g) Events sequence is mainly auditable for anomaly detection against existing policies and future policies
h) Events' sequence is also auditable for dispute resolution, investigations, risk management, and other legal activities
i) System provides limited access to information (i.e., content) concealed via encryption (channel encryption) and hashing (within the BlockChain)
j) The audit system is further refined, so that appropriate measures can be applied to limit an authorized Auditor's access down to individual users or Platform and/or to circumscribed transaction time periods.

As will be clear to one skilled in the art, the present invention should not be limited to the embodiments described herein, and a number of changes are possible which remain within the scope of the present invention.
Of course, the preferred embodiments shown above are combinable, in the different possible forms, being herein avoided the repetition all such combinations.

**Claims**

1. Method for anomaly detection of a sequence of computational events $Set_E$ associated with a computational system, **characterised in that** it comprises the following steps:

   - modelling a normal behaviour of said computational system;
   - for a sequence of computational events $Set_E$ associated with said computational system, determining the correspondence of such sequence of events of $Set_E$ with said normal behaviour, and thereby:

i) determining anomalies, such anomalies consisting of a sub-sequence of events of $Set_E$ which does not correspond to said normal behaviour, and

ii) hashing a sub-sequence of events of $Set_E$ which does correspond to said normal behaviour and subsequently adding such hashed sub-sequence of events to a Blockchain.

2. Method according to any of the previous claims wherein said modelling of a normal behaviour is performed by means of a regular expression $R_P = \{BB_1,...,BB_n\}$, where each element $BB_i$ consists of a representation of a sub-sequence of computational events which in turn corresponds to one or more policies associated with said computational system, said correspondence of $Set_E$ with the normal behaviour being thereby performed with respect to $R_P$.

3. Method according to the previous-claim wherein said one or more policies comprise check of control flow, data flow and/or extracted check points, such one or more policies being derived from an artificial intelligence system training.

4. Method according to any of the preceding claims wherein said sequence of computational events $Set_E$ is derived from computational operations within said computational system, said operations comprising:

- one or more running programs, each of such programs consisting of a benign program or malware, the computational system comprising such program and a malware detection system,
- transactions within a secure communications system, the computational system comprising such secure communications system,
- system events, the computational system consisting of an Internet connected device, optionally a high-performance computer, a cardiac pacemaker, an implantable cardioverter defibrillator or a bio-wearable device,

and, preferably, said one or more computational operations are obtained in real time.

5. Method according to the previous claim wherein the sequence of computational events $Set_E$ consists of:

- a set of executed transactions within the one or more running programs, thereby malware and/or malicious software execution being detected,
- a set of digital transactions within the secure communications system, thereby anomalies within communication patterns and/or communication habits and/or communication system attacks in said computational system being detected, or
- system events of a connected device, thereby anomalies and/or threats in said device being detected.

6. Method according to any of the claims 2-5 wherein said sequence of computational events $Set_E$ is represented as a sequence of computational blocks $bb_i$,

whereby $Set_E = \sum_{i=1}^{n} bb_i$ and each $bb_i$ is derived by means of a one-to-one mapping function $h$, in which $h(BB_i) = bb_i$.

7. Method according to any of the claims 3-5 wherein each of said sub-sequence of events $BB_i$ terminates at a control transfer instruction which consists of said check points, preferably such control transfer instruction consisting of:

- a threshold break between digital transactions, and /or a change in a type of digital transaction, and/or a threshold duration of a sequence of digital transactions, where the computational system is a secure communications system,
- a branch execution and/ or a jump instruction, where the computational system is a malware detection system, or
- system events that deviate from the normal behaviour, where the computational system is an Internet connected device.

8. Method according to any of the preceding claims wherein metadata associated with said sequence of events is encrypted and concatenated with the hashed sub-sequence of events, the addition to a Blockchain of step ii) being only performed after such concatenation.

9. Method according to the previous claim wherein said metadata comprises IP addresses of sender and receiver, MAC addresses of associated devices, classification level for encryption primitives or relevant flags associated with said sequence of events $Set_E$.

10. Method according to any of the preceding claims wherein, after step ii), and upon any update of the normal behaviour, a correspondence is performed between the referred hashed sub-sequence of events and said updated normal behaviour, thereby determining anomalies in the hashed sub-sequence of events with respect to such updated normal behaviour.

11. Method according to any of the preceding claims wherein said Blockchain is maintained in a plurality of validating peer systems, preferably each trusted validating peer system consisting of an individual system having a unique identifier.

12. Method according to any of the preceding claims wherein the correspondence of the sub-sequence of events of $Set_E$ with the normal behaviour consists of an intersection operation.

13. A platform for anomaly detection of a sequence of computational events $Set_E$ associated with a computational system **characterised in that** it is configured to implement the method of any of the preceding claims.

14. A distributed system for anomaly detection of a sequence of computational events $Set_E$ associated with a computational system **characterised in that** it comprises the platform of the previous claim and a plurality of validating peer systems configured to maintain said Blockchain, such validating peer systems optionally consisting of computers connected in network.

15. Non-transitory computer-readable storage media storing program instructions for implementing a method for anomaly detection of a sequence of computational events $Set_E$ associated with a computational system, the program instructions comprising instructions executable to carry out the method of any of the claims 1-12.

Figure 1

Europäisches
Patentamt

European
Patent Office

Office européen
des brevets

# EUROPEAN SEARCH REPORT

Application Number

EP 18 39 8002

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Satoshi Nakamoto: "Bitcoin: A Peer-to-Peer Electronic Cash System", , 13 January 2009 (2009-01-13), XP055386799, Retrieved from the Internet: URL:https://web.archive.org/web/2009013111 5053/http://www.bitcoin.org/bitcoin.pdf [retrieved on 2017-06-30] * abstract * * page 1, paragraph 1 * * page 1, paragraph 2 * * Section 2; page 2, paragraph 1 * * Section 2; page 2, paragraph 2 * * Section 5; page 3 * * Section 7, left-hand figure; page 4 * * lower figure; page 2 * ----- | 1-15 | INV. G06F21/55 G06F21/64 H04L29/06 |
| X | Arvind Narayanan ET AL: "Bitcoin and Cryptocurrency Technologies", , 9 February 2016 (2016-02-09), XP055442367, Retrieved from the Internet: URL:https://lopp.net/pdf/princeton_bitcoin _book.pdf [retrieved on 2018-01-18] * figure 1.11 * * figure 1.13 * * last paragraph; page 46 * * page 47, paragraph 1 * * figure 3.8 * * Section 3.4; page 88, paragraph 1 - paragraph 2 * ----- | 1-15 | **TECHNICAL FIELDS SEARCHED (IPC)** G06F H04L |

-/--

The present search report has been drawn up for all claims

| Place of search | Date of completion of the search | Examiner |
|---|---|---|
| Munich | 14 June 2018 | Dobre, Dan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 18 39 8002

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Nikolaos Alexopoulos ET AL: "Towards Blockchain-Based Collaborative Intrusion Detection Systems", <br><br> 13 October 2017 (2017-10-13), XP055483802, Retrieved from the Internet: URL:https://www.tk.informatik.tu-darmstadt.de/fileadmin/user_upload/Group_TK/filesDownload/Published_Papers/critis17CIDS_camera.pdf [retrieved on 2018-06-13] <br> * figure 1.11 * <br> * Section 2.2; <br> page 3 * <br> * Section 5; <br> page 6 - page 7 * <br> * figure 1 * <br> ----- | 1-15 | |
| A | EP 3 125 489 A1 (BRITISH TELECOMM [GB]) 1 February 2017 (2017-02-01) <br> * paragraph [0002] * <br> * paragraph [0003] * <br> * paragraph [0010] * <br> * paragraph [0007] * <br> * paragraph [0023] * <br> * paragraph [0026] * <br> * figure 3 * <br> ----- | 1-15 | TECHNICAL FIELDS SEARCHED (IPC) |

The present search report has been drawn up for all claims

| Place of search | Date of completion of the search | Examiner |
|---|---|---|
| Munich | 14 June 2018 | Dobre, Dan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 39 8002

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2018

| Patent document cited in search report | | Publication date | Patent family member(s) | | Publication date |
|---|---|---|---|---|---|
| EP 3125489 | A1 | 01-02-2017 | CN 106407808 | A | 15-02-2017 |
| | | | EP 3125489 | A1 | 01-02-2017 |
| | | | US 2017034197 | A1 | 02-02-2017 |

EPO FORM P0459

For more details about this annex : see Official Journal of the European Patent Office, No. 12/82